# EUROPEAN PATENT APPLICATION

(11) **EP 3 726 322 A1**
(43) Date of publication of application: **21.10.2020**
(21) Application number: 19170509.4
(22) Date of filing: 23.04.2019
(51) Int. Cl.: G05B 23/02, A23L 5/00

(54) **PREDICTIVE MAINTENANCE SYSTEM FOR KITCHEN MACHINES**

(30) Priority: 18.04.2019 PT 2019115465
(71) Applicant: Modelo Continente Hipermercados, S.A., 4464-503 Senhora da Hora (PT)
(72) Inventor: FARIA ROCHA, DUARTE NUNO, 3800-423 AVEIRO (PT)
(74) Representative: do Nascimento Gomes, Rui

(57) **Abstract**

The present invention generally relates to a predictive maintenance system for monitoring and tracking maintenance of kitchen machines, and more particularly concerns a monitoring system for use in performing integrated diagnostic maintenance of a large-scale network formed by a plurality of distributed kitchen machines. The predictive maintenance system now developed further more particularly concerns real time monitoring with non-intrusive sensor elements, combined with expert system diagnostics for automated maintenance.

## Description

### TECHNICAL FIELD

The technology described in the present application is enclosed in the area of kitchen machines, and relates to a predictive maintenance system. In the context of the present application, a kitchen machine is to be understood as a machine electrically ran/operated, typically comprising a mixing cup in which automatic mixing actions are performed and operating with automatic cooking programs.

### BACKGROUND ART

Today, monitoring and maintenance of kitchen machine solutions present technical problems, especially where no built-in testing features are present, which does not allow continuous monitoring operations to be performed, in an automatic and non-intrusive way, during the life cycle of such devices. This fact does not allow to optimize the operation of the kitchen machine and all of its constituent elements, with a view of reducing the need for technical repair operations. Besides that, the technology associated with such type of devices has experienced significant developments in recent years, which has led to the creation of increasingly complex kitchen machines, making repair operations more demanding and time-consuming.

Notwithstanding that fact, kitchen machine solutions of the state-of-the-art still resort to traditional maintenance methods, which generally rely on limited front panel indications, "roll up" diagnostics, and scope troubleshooting, all of which normally requiring technicians to be implemented. Also, the diagnostic methods that are being used, often based on ineffective testability of the kitchen machine as originally designed, frequently result in ambiguous testing results which are difficult to interpret by the technician. In this regard, intermittent and transient failure problems, related to, for example, kitchen machine's driving motor, its mixing and cutting means, the heating and cooling means of the mixing cup or the performance of the load cell used to measure weight or volume of ingredients placed into the mixing cup, present particular troubleshooting difficulties, since the originally designed test points are normally insufficient for unique fault isolation. Such limitations are particularly highlighted as the scale of the maintenance problem increases, and time constraints and the need for system operational competence increase. In fact, due to increasing complexity of technologies underlying Kitchen machine solutions there has been an increased need for the utilization of computers for diagnosing malfunctions. The foregoing traditional manpower intensive diagnostic techniques, provide virtually no information which would allow anticipation of approaching kitchen machine failures related to weariness/aging of its constituent elements. Such elements, like the driving motor, the mixing and cutting means, the heating and cooling means of the mixing cup or the load cell, for example, are not monitored in a regular and non-intrusive basis, which does not allow to adapt the operation of the kitchen machine and the execution of the respective automatic cooking programs with the view of reducing, avoiding and controlling failures.

In conclusion, what it is observed is that none of the solutions known from the state-of-the-art seems to consider a solution for the problem of kitchen machines' maintenance from the point of view of a large-distributed kitchen machines' network, as a way to achieve a predictive and preventive maintenance based on a continuous and non-intrusive monitoring of its constituent elements.

### SUMMARY

The present application generally relates to a predictive maintenance system for monitoring and tracking maintenance of kitchen machines, and more particularly concerns a predictive system for use in performing integrated diagnostic maintenance of a large-scale network formed by a plurality of distributed kitchen machines. The predictive maintenance system now developed further more particularly concerns real time remote monitoring of kitchen machine's operational data using non-intrusive sensor elements, combined with expert system diagnostics for automated and predictive maintenance.

Accordingly, it is a general object of the present application a predictive maintenance system for monitoring and maintenance tracking of kitchen machines, each of said kitchen machines being electrically ran and including an hardware module comprising at least i.) a mixing cup, ii.) mixing means provided in the mixing cup, iii.) a base station suitable for coupling of the mixing cup, said base station comprising a driving motor able to provide motion to the mixing means, iv.) means for cooling and heating the mixing cup and v.) means for automatically measuring weight or volume of ingredients placed into the mixing cup. The kitchen machine further comprises a control module with processing and storage means and a user-interface circuit.

The predictive maintenance system now proposed is comprised by a plurality of local units, each one to be connected to a kitchen machine, a central unit and a communication link interconnecting each of the plurality of local units to said central unit, forming a large-scale kitchen machine network.

Advantageously, each local unit of the system is comprised by a sensor module and a processor module. The sensor module includes a plurality of non-intrusive sensor elements, transparently interfaced with the elements i.) to v.) of the hardware module of such kitchen machine, in order to continuously monitor its behaviour and to collect its respective operational data. The processor module is programmed for generating an operational profile record of such kitchen machine, based on the operational data gathered by the respective sensor module. The system now developed comprises also a central unit comprising diagnostic expert means for receiving, storage and analysing operational profile records sent by local units, said expert means being programmed for i.) diagnosing failure causes of a given kitchen machine using experience-based diagnostic techniques and for ii.) generating maintenance data to be sent to the control module of such kitchen machine through the respective local unit.

It is also an object of the present application a method for operating a predictive maintenance system, said method being comprised by the following steps:
- a local unit gathers operational data of a kitchen machine connected to it, and generates an operational profile record associated to such kitchen machine, prior to transmit said operational profile record to a central unit;
- said central unit stores kitchen machines' operational profile records sent by a plurality of local units;
- the central unit generates maintenance data by processing an operational profile record associated to a specific local unit assigned to a given kitchen machine, using experience-based diagnostic techniques;
- the central unit transmits to the specific local unit the maintenance data for actuating the control module of the kitchen machine assigned to said specific local unit.

Such method provides for monitoring and tracking maintenance of kitchen machines, based on a distributed large-scale kitchen machines network, where operational profile records are integrated into an automated reasoning processing in orderto predictive kitchen machine's malfunctions and generate maintenance data with the purpose of reducing and controlling said failures.

### DESCRIPTION OF FIGURES

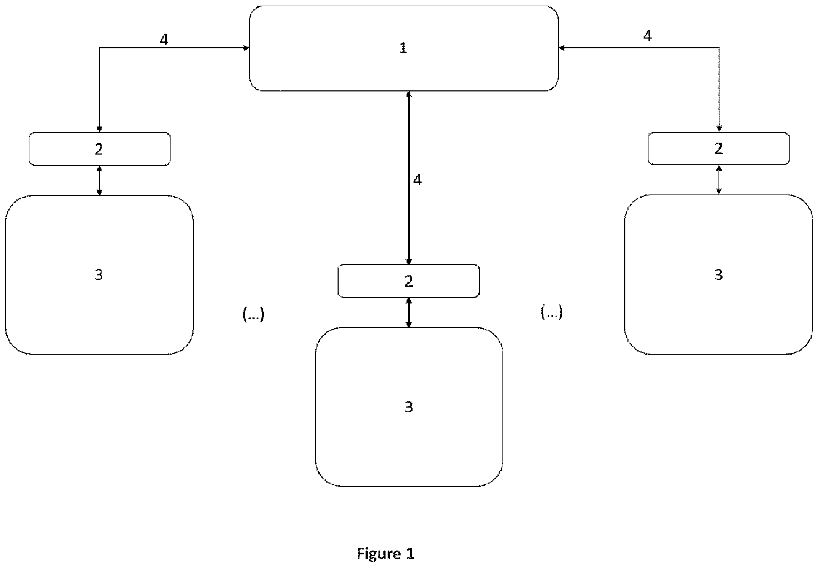

Figure 1 - representation of an embodiment of the predictive maintenance system for kitchen machines developed, wherein the reference signs represent:
   1 - central unit;
   2 - local unit;
   3 - kitchen machine;
   4 - communication link.

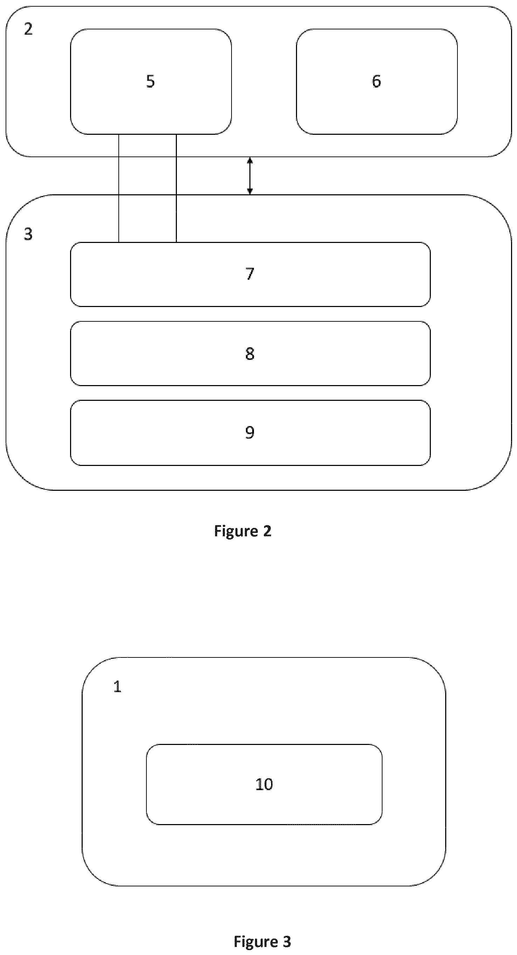

Figure 2 - representation of an embodiment of a local unit and of a kitchen machine of the system developed, wherein the reference signs represent:
   2 - local unit;
   3 - kitchen machine;
   5 - sensor module of the local unit;
   6 - processing unit of the local unit;
   7 - hardware module of the kitchen machine;
   8 - control module of the kitchen machine;
   9 - user-interface circuit of the kitchen machine.
Figure 3 - representation of an embodiment of a central unit, wherein the reference signs represent:
   1 - central unit;
   10 - diagnostic expert means.

### DETAILED DESCRIPTION

The more general and advantageous configurations of the technology now developed are described in the Summary. Such configurations are detailed below in accordance with other advantageous and/or preferred embodiments of implementation of the present application.

In an inventive aspect of the predictive maintenance system for a kitchen machine of the present application, it is comprised by a plurality of local units, each one to be connected to a kitchen machine, a central unit and a communication link interconnecting each of the plurality of local units to said central unit, forming a large-scale kitchen machine network.

In the context of the present application, a kitchen machine is to be understood as a machine electrically ran/operated, typically comprising a hardware module and a control module, and used for the comminution, cutting, mixing, kneading, emulsifying and the like of ingredients. The hardware module is comprised by the following elements: at least i.) a mixing cup, ii.) mixing means provided in the mixing cup, iii.) a base station suitable for coupling of the mixing cup, said base station comprising a motion transmitting means able to provide motion to the mixing means, iv.) means for cooling and heating the mixing cup, v.) means for automatically measuring weight or volume of ingredients placed into the mixing cup, and vi.) a control module with processing and storage means and a user-interface circuit.

In one embodiment of a kitchen machine, the mixing cup is a bowl with a substantially cylindrical or substantially tall truncated cone shape. In another embodiment the mixing means are provided in the mixing cup and consists of a mixer/stirrer which provides stirring of ingredients inside the mixing cup, or of a cutter - typically comprising a set of blades - which provides cutting of ingredients inside the mixing cup. Typically, the stirrer and the cutter are interchangeable. In another embodiment of the kitchen machine, the base station to which the mixing cup is attachable comprises motion transmitting means which, when the mixing cup is attached to the base, are able to provide motion to the mixing means. Such motion transmitting means consist of an electric motor. In another embodiment of a kitchen machine, the heating and cooling means are arranged in the base of the mixing cup and are electrically operated. In another embodiment of a kitchen machine, the measuring weight or volume means are of a scale type.

In another embodiment, the processor means of the kitchen machine's control module is specially configured to executed cooking programs which can be stored in the storage means, and wherein each cooking program comprises the activation of the mixing means and/or heating or cooling means for predefined periods of time according to a set of configurable parameters used to control the operational process of the kitchen machine. Said operational parameters can be related to rotation speed of the mixing means, its operation time and the temperature of the heating/cooling elements. For instance, to the preparation of a simple recipe such as whipped cream may correspond the cooking program of - after the placing of cream inside the mixing cup, a mixer being provided inside the mixing cup - the activation of the mixing means/mixer for 2 minutes at a predefined speed of rotation of the mixer. More complex recipes/cooking programs will comprise several stages of activation and configuration of the mixing means and the heating or cooling means means. In another embodiment, the storage means of the kitchen machine's control module is used to store user profile data.

In another embodiment, the user-interface circuit of the kitchen machine's control module comprises input means and output means. The input means are of keyboard or touch control type, and the output means are of a display, audio and/or luminous type. Such circuit further comprises processor means programmed to render the input means operative as interface means for providing input of parameters for i.) configuration and control the operational process of the kitchen machine, in particular in what concerns to the selection of a cooking program, ii.) display of such input parameters, and iii.) display of operational data, operational profile records generated by the local unit connected to the kitchen machine and history of malfunctions' records associated to said kitchen machine, and for providing iv.) user authentication. More particularly, the processor means of the user-interface circuit further comprises a first command that associates a kitchen machine's user with a unique logical name, a second command that creates a virtual disk on the storage means of the kitchen machine's control module and a third command that maps the virtual disk to the logical name, such that each kitchen machine's user that is associated with a logical name may access the virtual disk which comprises a data structure programmed to assigned an operational profile record of a given kitchen machine to a user associated with a logical name. In that way, it is possible to relate the kitchen machine operation, in particular, its operational data records, with a specific user, which will help to create a profile record that will be the base of the predictive and preventive maintenance executed.

In an innovative aspect of the predictive maintenance system developed, a local unit is connected to a kitchen machine. Consequently, the system assigns one local unit to a specific kitchen machine, creating a large-scale distributed network of local units, where each of said local units is assigned to a different kitchen machine, for the purpose of collecting its operational data used to create the respective operational profile records. To accomplished that, a local unit is comprised by a sensor module and a processor module. In one embodiment, the local unit is incorporated in the kitchen machine's hardware module, being the local unit's processor module implemented in the control module of the kitchen machine and the sensor module being installed in the kitchen machine's hardware module. In another embodiment, the local unit is a distributed-architecture type device, wherein the sensor module is installed in the kitchen machine's hardware module and the processor module is implemented in an external device. For that a low-power wireless communication link can be used for interconnecting the sensor module to the processor module of the local unit, said communication link preferably of a SIGFOX or LoRa type or of any other low-power wireless communication type. Alternatively, a wired communication link can be used for interconnecting the sensor module to the processor module of the local unit, wherein the kitchen machine further comprises a special-purpose communication port-interface adapted to provide connection to the external device. Said special purpose communication port-interface can be of any type suitable for establishing connection, communication data and power supply.

The sensor module of a local unit includes a plurality of non-intrusive sensor elements, transparently interfaced with the hardware module of such kitchen machine, in order to continuously monitor the behaviour of each of its elements to collect the respective operational data. Non-intrusive sensor implant elements, transparently interfaced with a given element of the hardware module, are used so as to not interfere with the operation thereof, for continuously gathering operational data from pre-selected elements within such module. The implant elements can be a plurality of data collection probes, respectively associated with each of the plurality of the elements of the hardware module. The operational data is continuously and uninterruptedly gathered by the sensor implant elements, during the operation cycle of the kitchen machine, and relates to its operation conditions. Said operation conditions may include, but is not limited to kitchen machine's location, operating times, gradients, heat and refrigeration times and temperatures, rotation speeds of the mixing means, power consumptions and operating temperatures data. In another embodiment, the operational data also includes humidity and room temperatures data surrounding the kitchen machine. The operational data is associated to a user that is operating the kitchen machine, allowing to create a personal operational data record for each user that operates the machine.

The processor module of a local unit is programmed for generating an operational profile record of the kitchen machine connected to it, based on the operational data gathered by the respective sensor module. Said operational profile record concerns to a data record that integrates, in a periodic basis, all the personal operational data records assigned to a given kitchen machine's user. More particularly, and in one embodiment, said integration involves a sample-to-sample comparison between the operational data parameters collected within a configurable time-frame and a standard operating model representing the ideal behaviour of a kitchen machine. In another embodiment, the integration involves the calculation of the weighted average of all the operational data parameters collected within a configurable time-frame and its comparison with a standard operating model representing the ideal behaviour of a kitchen machine.

The predictive maintenance system now developed also includes a central unit where all the heavy processing stage, based on the operational profile records sent by the local units of the network, is performed in order to generated maintenance data that can be used to control and reduce kitchen machine's malfunctions. It comprises diagnostic expert means for receiving, storing and analysing operational profile records sent by local units for diagnosing failure causes. In one embodiment, said diagnostic expert means are a forward-reasoning or backward-reasoning rule-based reasoning system, including an inference engine programmed to match a set of failure rules with multiple operational profile records to derive conclusions such as a diagnosis or a prediction. The rules are intended to cover all the possible failure modes, based on past experiences, i.e. history of malfunctions' records, and on the corresponding failure behaviours of each kitchen machine of the network. In another embodiment, the diagnostic expert means are a model-based reasoning system, including an inference engine programmed to match failure-model knowledge with multiple operation profile records to derive conclusions such as a diagnosis or a prediction. In this case, the failure-models are intended to cover all the possible failure modes, based on past experiences, i.e. history of malfunctions' records, and on the corresponding failure behaviours of each kitchen machine of the network

The availability of such expanded data, combined with an automated reasoning process utilizing maintenance personal type experience-based diagnostic techniques provides virtual trouble-shooters assistance for correctly and effectively predict and prevent malfunctions and logical elimination of false alarms. Based on that, maintenance data is generated and sent to the control module of kitchen machines through the respective local units in order to adapt the respective operational processes in order to control, reduce and avoid malfunctions. The maintenance data comprises operative instructions for the kitchen machine, said operative instructions used to either adapt or exclude cooking programs to be executed in favour of proper operation of the machine, and can be related to rotation speed and duty cycle regulation instructions or heating and cooling temperatures and times configuration. The maintenance data also comprises user-feedback instructions, said user-feedback instructions being of data, audio and/or luminous type, and are transmitted to the user interface-circuit of the kitchen machine through the respective local unit. In another embodiment, the local unit is further comprised by a GSM/GPRS modem, configured to provide user-feedback instructions of SMS, MMS or WAP data type.

The system now developed comprises a communication link interconnecting said plurality of local units to said central unit, each of the said local units including means for transmitting and receiving data to and from said central unit. In one embodiment, the communication link interconnecting each of the plurality of local units to the central unit, is a radio or cellular communication link.

The present application also describes a method for operating a predictive maintenance system, like the one described above, said method comprising the following steps:
- a local unit gathers operational data of a kitchen machine connected to it, and generates an operational profile record associated to such kitchen machine, prior to transmit said operational profile record to a central unit;
- said central unit store kitchen machines' operational profile records sent by a plurality of local units;
- the central unit generates maintenance data by processing an operational profile record associated to a specific local unit assigned to a given kitchen machine, using experience-based diagnostic techniques;
- the central unit transmits to the specific local unit the maintenance data for actuating the control module of the kitchen machine assigned to said specific local unit.

In one embodiment of the method, it further comprises the sept of authentication by a user of the kitchen machine. In this embodiment, each operational profile record of a given kitchen machine is associated to a specific user, allowing to adapt the operation of the machine, for the purpose of predictive and preventive maintenance, according to different users and its respective usage pattern.

As will be clear to one skilled in the art, the present application should not be limited to the embodiments described herein, and a number of changes are possible which remain within the scope of the present application.

Of course, the preferred embodiments shown above are combinable, in the different possible forms, being herein avoided the repetition all such combinations.

## Claims

1. Predictive maintenance system for kitchen machines, each of said kitchen machines being electrically ran and including an hardware module comprising i) a mixing cup, ii) mixing means provided in the mixing cup, iii) a base station suitable for coupling of the mixing cup, said base station comprising motion transmitting means able to provide motion to the mixing means, iv) means for automatically measuring weight or volume of ingredients placed into the mixing cup; and
a control module with processing and storage means and a user-interface circuit; said system **characterised in that** it comprises:
- a plurality of local units, each one to be connected to a kitchen machine, said local unit comprising a processor module and a sensor module, wherein the sensor module includes a plurality of non-intrusive sensor elements, transparently interfaced with the hardware module of such kitchen machine for continuously gathering operational data; and wherein the processor module being programmed for generating an operational profile record of such kitchen machine based on the operational data gathered by the respective sensor module;
- a central unit comprising diagnostic expert means for receiving, storage and analysing operational profile records sent by local units, said expert means being programmed for i.) diagnosing failure causes of a given kitchen machine using experience-based diagnostic techniques and for ii.) generating maintenance data to be sent to the control module of such kitchen machine through the respective local unit;
- a communication link interconnecting said plurality of local units to said central unit, each of the said local units including means for transmitting and receiving data to and from said central unit.

2. Predictive maintenance system according to claim 1, wherein the user-interface circuit of the kitchen machine's control module comprises:
input means and output means, wherein the input means are of keyboard or touch type, and the output means are of a display, audio and/or luminous type;
processor means programmed to render the input means and the output means operative as interface means for providing i.) input of parameters for configuration and control of the operational process of the kitchen machine, in particular in what concerns to the selection of a cooking program, ii.) display of such input parameters, iii.) display of operational profile records generated by the local unit connected to the kitchen machine and for providing iv.) user authentication.

3. Predictive maintenance system according to claim 2, wherein the processor means of the user-interface circuit further comprises:
a first command that associates a kitchen machine's user with a unique logical name;
a second command that creates a virtual disk on the storage means of the kitchen machine's control module;
a third command that maps the virtual disk to the logical name, such that each kitchen machine's user that is associated with a logical name may access the virtual disk, wherein,
the virtual disk comprises a data structure programmed to assigned the operational profile record to a user associated with a logical name.

4. Predictive maintenance system according to any of the previous claims, wherein
the local unit is incorporated in the kitchen machine hardware module, being the local unit's processor module implemented in the control unit of the kitchen machine and the sensor module being installed in the kitchen machine's hardware module; or
the local unit is a distributed-architecture type device, wherein the sensor module is installed in the kitchen machine's hardware module and the processor module is implemented in an external device.

5. Predictive maintenance system according to claim 4, further comprising:
a low-power wireless communication link interconnecting the sensor module to the processor module of the local unit, said communication link preferably of a SIGFOX or LoRa type; or
a wired communication link interconnecting the sensor module to the processor module of the local unit,

6. Predictive maintenance system according to claims 4 or 5, wherein the kitchen machine further comprises a special-purpose communication port-interface adapted to connect to the external device.

7. Predictive maintenance system according to any of the previous claims, wherein the operational data gathered by the sensor module comprises location, operating times, gradients, heat and refrigeration time and temperature, rotation speed of the mixing means, power consumptions and operating temperature data of the elements of the hardware module of a kitchen machine where the respective local unit is connected.

8. Predictive maintenance system according to claim 7, wherein the operational data gathered by the sensor module further comprises humidity and room temperature data surrounding the kitchen machine.

9. Predictive maintenance system according to any of the previous claims, wherein the diagnostic expert means of the central unit comprises a model-based and/or a rule-based reasoning system, configured to execute automated reasoning processing to generate maintenance data.

10. Predictive maintenance system according to claim 9, wherein the maintenance data comprises user-feedback instructions and operative instructions of the kitchen machine; said operative instructions being configured to control the operational process of the kitchen machine, and comprises instructions for:
mixing means rotation speed regulation;
heating/cooling means temperature and time regulation;
kitchen machine's duty cycle regulation;
said instructions being transmitted by the central unit to the control module of the kitchen machine through the respective local unit.

11. Predictive maintenance system according to claim 10, wherein the user-feedback instructions being of data, audio and/or light type, being transmitted by the central unit to the user interface-circuit of the kitchen machine through the respective local unit.

12. Predictive maintenance system according to claim 11, wherein the local unit is further comprised by a GSM/GPRS modem, configured to provide user-feedback instructions of SMS, MMS or WAP data type.

13. Predictive maintenance system according to any of the previous claims, wherein the communication link interconnecting each of the plurality of local units to the central unit, is a radio or cellular communication link.

14. Method for operating a predictive maintenance system, suitable for monitoring and tracking maintenance of kitchen machines, **characterised in that** it comprises the following steps:
- a local unit gathers operational data from a kitchen machine connected to it;
- the local unit generates an operational profile record of such kitchen machine, based on the gathered operational data; said generation being performed on a periodic-basis, preferably on a daily-basis;
- the local unit transmits the operational profile record associated to the kitchen machine connected to it, to a central unit;
- the central unit receives and stores operational profile records sent by a plurality of local units;
- the central unit processes an operational profile record, associated to a specific local unit assigned to a given kitchen machine, using experience-based diagnostic techniques for monitoring and tracking maintenance, based on the operational profile records stored, in order to generate maintenance data;
- the central unit transmits the maintenance data to the such specific local unit; said maintenance data comprising user-feedback instructions and operative instructions;
- said specific local unit actuates on the control module of the respective kitchen machine, using the operative instructions, in order to control the operational process of the kitchen machine; said operative instructions involving the regulation of the following operational parameters of the kitchen machine:
- mixing means rotation speed;
- heating/cooling means temperature and time;
- kitchen machine's duty cycle.

15. Method according to claim 14, further comprising the sept of authentication by a user of the kitchen machine.
